**Europäisches Patentamt**

(19) **European Patent Office**

**Office européen des brevets**

(11) Numéro de publication: **0 006 815**
**B1**

(12) # FASCICULE DE BREVET EUROPEEN

(45) Date de publication du fascicule du brevet: **09.02.83**

(51) Int. Cl.³: **C 04 B 17/05**

(21) Numéro de dépôt: **79400437.4**

(22) Date de dépôt: **28.06.79**

(54) Composition durcissable à base de magnésie, de chlorure de magnésium et d'eau et objets composites obtenus à l'aide de cette composition.

(30) Priorité: **04.07.78 FR 7819913**

(43) Date de publication de la demande:
**09.01.80 Bulletin 80/1**

(45) Mention de la délivrance du brevet:
**09.02.83 Bulletin 83/6**

(84) Etats contractants désignés:
**BE CH DE GB IT LU NL SE**

(56) Documents cités:
**FR - A - 1 127 975**
**FR - A - 2 075 790**
**US - A - 2 939 799**

(73) Titulaire: **Newco Synthetics International Inc.**
**330, University Avenue**
**Toronto, Ontario M5G 1S1 (CA)**

(72) Inventeur: **Pascau, Jean-Maurice**
**22, rue Pelleport**
**F-33800 Bordeaux (FR)**

(74) Mandataire: **Thevenet, Jean-Bruno et al,**
**Cabinet BEAU DE LOMENIE 55 rue d'Amsterdam**
**F-75008 Paris (FR)**

Courier Press, Leamington Spa, England.

## Composition durcissable à base de magnésie, de chlorure de magnésium et d'eau et objets composites obtenus à l'aide de cette composition

La présente invention concerne une composition durcissable, du type contenant de la magnésie à l'état divisé, une matière de charge, du chlorure de magnésium et de l'eau.

On connaît par le brevet français N° 1.127.975 et par le brevet américain US-A-2.939.799 des compositions de ce type dans lesquelles la matière de charge contient de la farine de bois.

Il a été trouvé que la farine de bois, comme d'autres charges absorbantes, piège une partie du chlorure de magnésium en solution dans l'eau, ce qui cause un appauvrissement apparent en chlorure de magnésium par rapport à la magnésie, provoquant des craquelures inacceptables dans le matériau durci. Une augmentation de $MgCl_2$ dans la composition nécessite une augmentation de la teneur en eau de cette solution, ce qui conduit à rendre cette composition trop liquide pour pouvoir être appliquée au pinceau, au rouleau ou à la truelle.

L'invention remédie à cet inconvénient et a notamment pour but de proposer une composition durcissable de grande onctuosité et donnant un matériau durci ayant une excellente adhérence sur tout support.

Ce but est atteint, conformément à l'invention, du fait que la matière de charge comprend de la poudre — ou farine — de cellulose — ou cellulosique —, et que cette composition durcissable comprend en outre un latex. De préférence, cette composition contient, en parties en poids,:
- — 10 à 50 % d'eau,
- — 5 à 30 % de chlorure de magnésium,
- — 0,2 à 5 % de latex en poids d'extrait sec,
- — 10 à 50 % de magnésie, et
- — 5 à 40 % de poudre de cellulose à l'état sec.

On entend par poudre de cellulose un produit pulvérulent dont les grains:

1) passent un tamis de au moins 40 mailles par cm et, de préférence, de 80 mailles par cm (c'est-à-dire dont les grains ont un diamètre moyen d'au plus 250 $\mu$m et, de préférence, d'au plus 125 $\mu$m);

2) contiennent au moins 50 % de cellulose pure et, de préférence, au moins 65 % de cellulose pure. Une telle teneur en cellulose pure peut être obtenue avec du bois d'épicéa ou de bouleau.

L'association de poudre de cellulose et de latex présente l'effet surprenant de limiter la quantité de chlorure de magnésium en solution aqueuse piégée. De plus, le latex confère au matériau durci des propriétés hydrofuges rendant ce matériau particulièrement intéressant pour le bâtiment, les travaux publics, la fabrication d'emballage, de véhicules marins, etc.

De plus, la poudre de cellulose, contrairement à la farine de bois courante, se mélange intimement à tous les autres constituants de cette composition pour donner une pâte fine et onctueuse.

Avantageusement, cette composition comprend en outre, au moins l'un des constituants suivants: de la silice en poudre à raison de 4 à 35 % en parties en poids, du talc à raison de 4 à 20 % en parties en poids, et de la poudre de pierre naturelle à raison de 5 à 50 % en parties en poids.

Avantageusement, le latex est du type acrylique ou du type caoutchouc naturel ou synthétique.

Avantageusement, la teneur de latex en poids d'extrait sec est comprise entre 1 et 15 % du poids de la poudre de cellulose à l'état sec.

Avantageusement, la teneur en poudre de cellulose en poids est comprise entre 30 et 150 % du poids de magnésie.

Avantageusement, la silice est en poudre fine, le diamètre moyen des grains étant de préférence au plus égal à 50 $\mu$m, avec de préférence une teneur en poids comprise entre 30 % et 200 % du poids de poudre de cellulose. Grâce à la présence de silice, l'on obtient un matériau dur et ignifuge malgré la présence de farine cellulosique.

Avantageusement, la teneur de talc en poids est comprise entre 30 % et 70 % du poids de poudre de cellulose.

L'invention concerne également le matériau durci obtenu à partir de la composition durcissable ci-dessus définie.

L'invention concerne aussi un objet solide composite comprenant une partie de support en plastique expansé, par exemple en polystyrène ou en polyuréthane expansé, recouverte par au moins une couche de matériau durci tel que défini plus haut.

La poudre de cellulose facilite l'accrochage dudit matériau sur le plastique expansé constituant le support. De plus, la finesse des grains de cellulose permet d'obtenir une plus grande finesse de moulage de la composition.

Grâce à la présence de silice en poudre fine et en quantité suffisante, de préférence en quantité en poids sensiblement égale à celle de la farine cellulosique et de la magnésie, la couche de matériau durci constitue une véritable coque dure et non cassante. Ceci rend cet objet composite particulièrement applicable à la constitution de panneau isolant et/ou porteur, de poutres, de panneau moulé en forme de toit de tuiles pour l'industrie du bâtiment, de bornes kilométriques, etc.

D'autres caractéristiques et avantages de l'invention seront mieux compris à la lecture de la description qui va suivre de plusieurs exemples de réalisation et en se référant aux dessins annexés dans lesquels:
- — la figure 1 est une coupe à travers un panneau selon un mode de réalisation de l'invention; et

— la figure 2 est une vue en perspective d'un panneau en forme de toit de tuiles selon un mode de réalisation de l'invention.

### Exemple I

Pour fabriquer par exemple des panneaux isolants phonique et thermique et ignifuge, pour la réalisation de bâtiments, ou des palettes d'avions, ou des bornes kilométriques, on utilise la formule suivante:

*Liquide pour 100 litres*

— 60 l d'eau

— 30 kg chlorure de magnésium ($MgCl_2$)

— 10 l caoutchouc synthétique en suspension aqueuse à raison de 200 grammes par litre.

*Poudre pour 100 kg*

— 30 kg magnésie (MgO)

— 30 kg silice en poudre fine (diamètre moyen de grains inférieur à 50 $\mu$m).

— 15 kg talc

— 25 kg farine de cellulose (diamètre moyen des grains inférieur à 200 $\mu$m).

On constitue une pâte en mélangeant ce liquide avec cette poudre à raison d'un kg de poudre par litre de liquide.

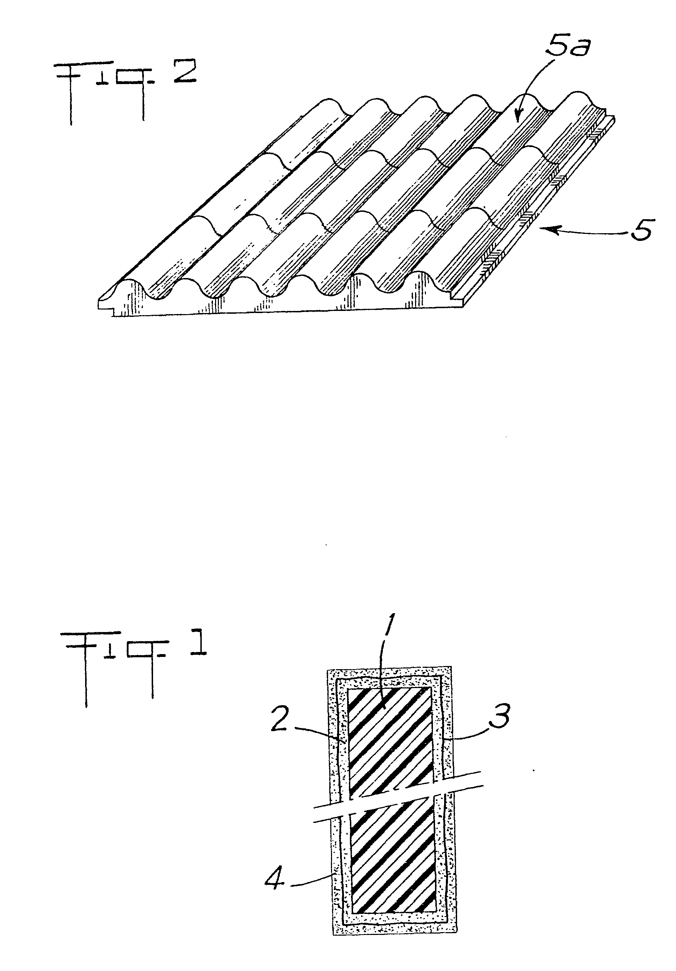

Sur un support plan parallélépipédique en polystyrène expansé ou en mousse de polyuréthane 1, on dépose une couche 2 de cette pâte sur les 6 faces extérieures du support 1; on applique une toile ou nappe de fibres de verre (3 fils au cm2) 3 sur ces 6 faces. On dépose alors une deuxième couche 4 sur ces 6 faces, et on laisse sécher (figure 1).

### Exemple II

Pour fabriquer un panneau de tuiles porteur, isolant, phonique et thermique et ignifuge, on utilise la même formule que dans l'exemple I.

On utilise un support 5 de polystyrène ou de mousse polyuréthane conformé comme représanté à la figure 2. On dépose une couche de la pâte selon l'exemple I sur toutes les faces du support 5. On applique ensuite une toile de fibre de verre (3 fils au cm2) sur ces faces; on dépose une deuxième couche sur lesdites faces sauf sur celle ondulée (5a) du support.

Sur la face ondulée 5a, on applique un modelage qui imitera parfaitement la brique ou tuile avec une pâte durcissable teintée dans la masse à l'aide de n'importe quel colorant de la couleur des tuiles.

Cette pâte est obtenue en mélangeant ensemble le liquide et la poudre spécifiés dans l'exemple I à raison de 2kg de poudre par litre de liquide.

### Exemple III

Pour fabriquer des pierres artificielles, on utilises la formule suivante:

*Liquide pour 100 Litres*

— 60 l d'eau

— 30 kg chlorure de magnésium ($MgCl_2$)

— 10 l caoutchouc synthétique en suspension aqueuse à raison de 200 g par litre.

*Poudre pour 100 kg*

— 30 kg magnésite cuite (MgO)

— 30 kg poudre de pierre naturelle calcaire

— 10 kg talc

— 15 kg farine de cellulose

— 15 kg silice

On mélange ce liquide et cette poudre à raison de 2 kg de poudre par litre de liquide, pour obtenir une pâte.

On ajoute à cette pâte des oxydes de fer ou n'importe quel colorant pour retrouver la couleur désirée de la pierre.

On étale la pâte sur un plan ou on la répand dans un moule, et on la laisse sécher.

### Exemple IV

Pour fabriquer ou réparer une marche d'escalier, on utilise la formule suivante:

*Liquide pour 100 litres*

— 60 l d'eau

— 30 kg chlorure de magnésium

— 10 l caoutchouc synthétique en suspension aqueuse à raison de 200 g par litre.

*Poudre pour 100 kg*

— 30 kg magnésite cuite

— 30 kg silice en poudre fine

— 15 kg talc

— 25 kg farine de cellulose

On mélange ensemble ce liquide et cette poudre à raison de 3 kg de poudre par litre de liquide pour obtenir une pâte assez consistante.

On étale cette pâte sur une épaisseur de 1cm, et on laisse sécher.

### Exemple V

Pour fabriquer une coque de bateau, on utilise la formule suivante:

*Liquide pour 100 litres*

— 50 l d'eau

— 35 kg chlorure de magnésium

— 15 l caoutchouc synthétique en suspension aqueuse à raison de 200 g par litre.

*Poudre pour 100 kg*

— 30 kg de magnésite cuite

— 15 kg de talc

— 15 kg de silice en poudre fine

— 40 kg de farine de cellulose.

On mélange ensemble ce liquide et cette poudre à raison d'un kg de poudre par litre de liquide pour obtenir une pâte.

On étale une première couche de cette pâte sur un moule; on applique sur cette couche une toile fine de fibres de verre (3 fils au cm2).

On étale une deuxième couche de pâte sur cette toile et on applique sur cette couche une toile de fibres de verre plus forte (maille de 1 cm2).

On étale une troisième couche de pâte sur cette toile forte et on applique une deuxième toile de fibre de verre fine (3 fils au cm2).

On recouvre cette dernière toile d'une quatrième couche de pâte, on laisse sécher et on démoule.

Grâce à la teneur élevée en farine de cellu-

# 0 006 815

lose de la formule utilisée selon le présent exemple, l'on obtient un matériau qui peut être facilement scié et qui peut recevoir des vis.

Le tableau annexé donne, pour chaque exemple, la teneur en parties en poids de chaque constituant de la composition utilisée.

Le matériau durci, objet de la présente demande de brevet, est imputrescible, ignifuge, résistant, isotherme, isophone, et il peut se mélanger avec divers déchets tels que ferrailles, feuilles mortes, sciures, fibres de bois, polystyrène, vermicullite.

Ce matériau peut être utilisé pour les constructions légères, les panneaux préfabriqués ou autres, les sols, les canalisations, les gaines, les fausses tuiles, les fausses poutres, les fausses boiseries, les jouets, les objets de fantaisie et publicitaires, les marches d'escaliers, les pierres, les sols isolants, les palettes de chargement, etc.

Dans les exemples I à V donnés ci-dessus, on a utilisé du caoutchouc synthétique commercialisé par HOECHST sous la référence "MOUVITON M 300", de la silice en poudre de référence SIFRACO, et de la farine de cellulose de référence LIGNOFIBRE T 80 fabriquée par la Société LIGNOFIBRE, Route de Dôle, ARBOIS (Jura) France.

TABLEAU
(parties en poids)

| | Eau | MgCl$_2$ | Latex* | MgO | Silice en poudre | Talc | Farine de cellulose | Poudre de pierre naturelle |
|---|---|---|---|---|---|---|---|---|
| Exemples I et II | 33 | 15 | 1 | 15 | 15 | 7,5 | 13,5 | 0 |
| Exemple II (couche de modelage tuiles) | 22 | 10 | 0,7 | 20 | 20 | 10 | 17,3 | 0 |
| Exemple III | 22 | 10 | 0,7 | 20 | 10 | 7,3 | 10 | 20 |
| Exemple IV | 16 | 7,5 | 0,5 | 22,6 | 23,1 | 11,3 | 19 | 0 |
| Exemple V | 31 | 17,6 | 1 | 15 | 7,5 | 7,5 | 20,4 | 0 |

* en poids d'extrait sec.

## Revendications

1. Composition durcissable, du type contenant de la magnésie, du chlorure de magnésium, de l'eau et des matières de charge, caractérisée en ce que la matière de charge comprend de la farine de cellulose et en ce que la composition comprend en outre un latex.

2. Composition selon la revendication 1, caractérisée en ce qu'elle comprend essentiellement, en parties en poids,
— 10 à 50 % d'eau,
— 5 à 30 % de chlorure de magnésium,
— 0,2 à 5 % de latex en poids d'extrait sec,
— 10 à 50% de magnésie, et
— 5 à 40% de poudre de cellulose à l'état sec.

3. Composition selon la revendication 2, caractérisée en ce qu'elle comprend, en outre, au moins l'un des constituants suivants: de la silice en poudre à raison de 4 à 35 % en parties en poids, du talc à raison de 4 à 20 % en parties en poids, et de la poudre de pierre naturelle à raison de 5 à 50 % en parties en poids.

4. Composition durcissable selon l'une des revendications 2 et 3, caractérisée en ce que le latex est du type acrylique ou du type caoutchouc naturel ou synthétique.

5. Composition selon l'une revendication 2 à 4, caractérisée en ce que la teneur de latex en poids d'extrait sec est comprise entre 1 et 15 % du poids de la poudre de cellulose à l'état sec.

6. Composition selon l'une des revendications 2 à 5 caractérisée en ce que la teneur en poudre de cellulose en poids est comprise entre 30 et 150 % du poids de magnésie.

7. Composition selon l'une des revendications 3 à 6, caractérisée en ce que la silice est en poudre fine, le diamètre moyen des grains étant de préférence au plus égal à 50 $\mu$m, avec de préférence une teneur en poids comprise entre 30 % et 200 % du poids de poudre de cellulose.

8. Composition selon l'une des revendications 2 à 7, caractérisée en ce que la teneur de talc en poids est comprise entre 30 % et 70 % du poids de poudre de cellulose.

9. Objet solide composite, caractérisé en ce qu'il comprend un support en plastique expansé recouvert, sur au moins une face, d'une couche de matériau durci obtenu à partir de la composition selon l'une des revendications 1 à 8.

10. Objet solide composite selon la revendication 9, caractérisé en ce que la couche de matériau durci est armée d'une toile ou nappe de fils, fibres ou filaments textiles ou de verre.

## Claims

1. Hard-setting composition, of the type containing magnesia, magnesium chloride, water and filler materials, characterised in that the filler material comprises cellulose powder and in that the composition further comprises a latex.

2. Composition according to claim 1, characterised in that it is essentially composed, in parts by weight, of:
— 10 to 50% water,
— 5 to 30% magnesium chloride,
— 0.2 to 5% latex by weight of dry extract,
— 10 to 50% magnesia, and
— 5 to 40% dry cellulose powder.

3. Composition according to claim 2, characterised in that it further comprises at least one of the following constituents: silica in powder form in the proportion of 4 to 35% in parts by weight, talc in the proportion of 4 to 20% in parts by weight and natural stone powder in the proportion of 5 to 50% in parts by weight.

4. Hard-setting composition according to one of claims 2 and 3, characterised in that the latex is of the acrylic type or of the natural or synthetic rubber type.

5. Composition according to one of claims 2 to 4, characterised in that the latex contents by weight of dry extract is between 1 and 15% of the weight of the dry cellulose powder.

6. Composition according to one of claims 2 to 5 characterised in that contents of cellulose powder by weight may vary between 30 and 150% of the weight of magnesia.

7. Composition according to one of claims 3 to 6, characterised in that the silica is in fine powder form, the mean diameter of the particles being preferably at the most equal to 50$\mu$m, with preferably a contents by weight varying between 30% and 200% of the weight of cellulose powder.

8. Composition according to one of claims 2 to 7, characterised in that the talc contents by weight is between 30% and 70% of the weight of cellulose powder.

9. Solid composite object, characterised in that it comprises a support in expanded plastics, coated on at least one face, with a layer of the hardsetting material obtained from the composition according to one of claims 1 to 8.

10. Solid composite object according to claim 9, characterised in that the layer of hardsetting material is reinforced with a web of textile or glass yarns, fibers or filaments.

## Patentansprüche

1. Verhärtende Zusammensetzung, die Magnesia, Magnesiumchlorid, Wasser und ein Füllmittel enthält, dadurch gekennzeichnet, dass das Füllmittel aus Zellulosemehl besteht, und dass sie zusätzlich ein Latex enthält.

2. Zusammensetzung nach Anspruch 1, dadurch gekennzeichnet, dass sie im wesentlichen auf 100 Gewichtsteile bezogen
10 bis 50 Gewichtsteile Wasser,
5 bis 30 Gewichtsteile Magnesiumchlorid,

0,2 bis 5 Gewichtsteile Latex (Trockengewicht),

10 bis 50 Gewichtsteile Magnesia, und

5 bis 40 Gewichtsteile Zellulosepulver (Trockengewicht) enthält.

3. Zusammensetzung nach Anspruch 2, dadurch gekennzeichnet, dass die zusätzlich mindestens einen der folgenden Bestandteile enthält: pulverförmige Kieselerde in einer Menge von 4 bis 35 Gewichtsteilen, Talk in einer Menge von 4 bis 20 Gewichtsteilen, und pulverförmigen Naturstein in einer Menge von 5 bis 50 Gewichtsteilen.

4. Zusammensetzung nach einem der Ansprüche 2 und 3, dadurch gekennzeichnet, dass das Latex ein Acryllatex oder ein Natur- oder Kunstkautschuk ist.

5. Zusammensetzung nach einem der Ansprüche 2 bis 4, dadurch gekennzeichnet, dass der Latexgehalt im Trockengewicht 1 bis 15 Gewichtsprozent des Zellulosepulvers beträgt.

6. Zusammensetzung nach einem der Ansprüche 2 bis 5, dadurch gekennzeichnet, dass der Gewichtsanteil an Zellulosepulver 30 bis 150 % des Magnesiagewichts beträgt.

7. Zusammensetzung nach einem der Ansprüche 3 bis 6, dadurch gekennzeichnet, dass die Kieselerde in fein pulverartiger Form vorliegt, dass der durchschnittliche Durchmesser der Kieselerdekörner vorzugsweise höchstens gleich 50 $\mu$m ist und dass der Gewichtsanteil von Kieselerde vorzugsweise 30 bis 200 % des Zellulosepulvergewichts beträgt.

8. Zusammensetzung nach einem der Ansprüche 2 bis 7, dadurch gekennzeichnet, dass der Gewichtsanteil an Talk 30 bis 70 % des Zellulosepulvergewichts beträgt.

9. Geschichteter Festkörper, dadurch gekennzeichnet, dass er ein tragendes Teil aufweist, das aus einem Schaumkunstoff besteht, welches auf mindestens einer Seite von einer gehärteten Materialschicht überzogen ist, die eine Zusammensetzung nach einem der Ansprüche 1 bis 8 hat.

10. Festkörper nach Anspruch 9, dadurch gekennzeichnet, dass die gehärtete Materialschicht durch eine Einlage aus Gewebe oder Textil- bzw. Glasfäden oder -fasern verstärkt ist.

Fig. 2

5a

5

Fig. 1

1

2

3

4

1